# EUROPÄISCHE PATENTSCHRIFT

(11) **EP 2 803 794 B1**
(45) Veröffentlichungstag und Bekanntmachung des Hinweises auf die Patenterteilung: **27.03.2019**
(21) Anmeldenummer: 14168363.1
(22) Anmeldetag: 14.05.2014
(51) Int. Cl.: E05B 81/06, E05B 81/44, E05B 85/22, E05B 81/34, E05B 77/42, E05B 83/34, B60R 25/02, E05B 77/38, E05B 15/04

(54) **ELEKTROMECHANISCHE VERRIEGELUNGSEINHEIT FÜR DEN FAHRZEUGBEREICH**
ELECTROMECHANICAL LOCKING UNIT FOR VEHICLES
UNITÉ DE VERROUILLAGE ÉLECTROMÉCANIQUE POUR LE DOMAINE AUTOMOBILE

(30) Priorität: 16.05.2013 DE 102013008550
(43) Veröffentlichungstag der Anmeldung: 19.11.2014
(73) Patentinhaber: Huf Hülsbeck & Fürst GmbH & Co. KG, 42551 Velbert (DE)
(72) Erfinder: Kornev, Oleg, 85232 Bergkirchen (DE)
(74) Vertreter: Henkel, Breuer & Partner

(56) Entgegenhaltungen:
- EP-A1- 0 449 367
- WO-A1-99/15748
- DE-U1-202004 020 261
- GB-A- 2 054 725
- US-A- 4 645 050
- US-A1- 2006 103 145
- US-A1- 2011 278 867

## Beschreibung

Die vorliegende Erfindung betrifft eine elektromechanische Verriegelungseinheit für den Fahrzeugbereich. Im Fahrzeugbereich sind zahlreiche elektromechanische Verriegelungseinheiten im Einsatz, beispielsweise als Lenkungsverriegelung zur Verhinderung einer Lenksäulendrehung im versperrten Zustand eines Fahrzeuges, als Tür-, Fenster- oder Klappenverriegelung für Türen, Fenster, Heckklappe oder Tankdeckel eines Fahrzeugs, und - im Rahmen von aktuellen Entwicklungen alternativer Antriebskonzepte - auch zur Verriegelung von Ladesteckern von elektrischen Ladekabeln oder von Zapfsäulenverbindungen für Gas-, Wasserstoff- oder Methanbetankung.

Der Begriff "Fahrzeugbereich" umfasst demnach alle Arten von Kraftfahrzeugen - Auomobile, Lastkraftwagen, Zweiräder usw. - und darunter jeweils einschließlich solche mit Verbrennungsmotor, Elektroantrieb und Kombinationen verschiedener Antriebskonzepte (Hybridantriebe).

Elektromechanische Verriegelungseinheiten bei Ladesteckern von elektrischen Ladekabeln oder Wasserstoffbetankung sind ferner sowohl an der Seite der Energieversorgungsstationen wie beispielsweise Tankstellen oder Ladestationen, als auch fahrzeugseitig oder integriert in die jeweiligen Stecker bzw. Buchsen der Verbindungsleitungen zwischen Fahrzeug und Energieversorgungsstationen im Einsatz.

Charakteristisch für den Einsatz der Verriegelungseinheiten im Fahrzeugbereich sind die Forderungen nach kompakten Abmessungen, nach sehr kurzen Betätigungszeiten, nach hohen Haltekräften, nach Funktionssicherheit selbst bei extremen Umweltbedingungen wie Feuchtigkeit und großen Temperaturunterschieden, sowie nicht zuletzt nach kostengünstiger Herstellung.

Aus der Druckschrift DE 102011050998 A1 ist beispielsweise eine elektromechanische Verriegelungsvorrichtung für Elektrofahrzeuge zur Ver- und Entriegelung eines Ladekabelsteckers an einer Ladekabelbuchse bekannt, die einen Elektromotor als Antriebsquelle und einen Verriegelungsmechanismus aufweist, durch den die Antriebskraft des Elektromotors mittels eines mechanischen Getriebezuges auf einen als Verriegelungsglied dienenden beweglichen Sperrbolzen übertragen wird, der zwischen einer Verriegelungsstellung und einer Entriegelungsstellung bewegt wird. Der mechanische Getriebezug umfasst eine auf der Abtriebswelle des Elektromotors befestigte und durch diesen angetriebene Schnecke, die mit einer Verzahnung am Außenumfang eines Schneckenrades in Eingriff ist und dieses dreht. Am Schneckenrad ist wiederum eine Steuerkurve ausgebildet, welche die Drehbewegung des Schneckenrades in eine lineare Bewegung eines durch die Steuerkurve geführten Mitnehmers und dann auf den Sperrbolzen überträgt. Die gesamte Verriegelungsvorrichtung ist in einem Gehäuse gekapselt und bildet eine Verriegelungseinheit, die in den Ladekabelstecker so eingebaut wird, dass der Sperrbolzen in der Verriegelungsstellung aus dem Stecker vorragt und in eine Ausnehmung in der Ladekabelbuchse eingreift, so dass der Ladekabelstecker ohne Aktivierung der Verriegelungsvorrichtung nicht aus der Ladekabelbuchse herausgezogen werden kann.

Eine ganz ähnlich arbeitende elektromechanische Verriegelungsvorrichtung ist in der DE 10109609 C1 offenbart und dient in der dort beschriebene Variante zum mechanischen Verriegeln der Lenkspindel eines Kraftfahrzeuges. Beim Betätigen des Zündschlüssels in die Absperrstellung oder ggf. beim Abziehen des Zündschlüssels oder anderweitige, z.B. berührungsose, Betätigung wird der Elektromotor dieser Verriegelungsvorrichtung aktiviert und bewegt den Sperrbolzen in die Verriegelungsstellung, in der er in einen Sperrkranz an der Lenkspindel eingreift.

Eine weitere ähnliche elektromechanische Verriegelungseinheit für einen Ladekabelstecker für Elektrofahrzeuge ist in der DE 102011050998 A1 beschrieben und in der Fig. 1 dargestellt. In einem Gehäuse 9 sind ein Elektromotor 2 und ein Getriebe mit einer durch den Elektromotor 2 direkt angetriebenen Schnecke 2.1 und einem Schneckenrad 4 untergebracht, das mit einer Verzahnung 4.4 am Außenumfang vesehen ist und mit der Schnecke 2.1 in Eingriff ist. Das Schneckenrad 4 ist zur Drehung um eine Drehachse 4.2 gelagert und besitzt axial an einer Stirnseite eine sprialförmige Kulisse oder Führungsbahn 4.1, mit der ein Führungselement 3.1 eines Verriegelungsgliedes 3 in Eingriff ist. Das Führungselement 3.1 kann sich nur in Radialrichtung bewegen, wodurch eine Drehung der Führungsbahn 4.1 bei Drehung des Schneckenrades 4 eine lineare Bewegung des Führungselements 3.1 und damit des Verriegelungsgliedes 3 bewirkt. Mit den Bezugszeichen 18,19 sind Schalter zur Erfassung bestimmter Bewegungspositionen des Schneckenrads bzw. des Verriegelungsgliedes angedeutet.

Den vorstehend beispielhaft beschriebenen Verriegelungseinheiten ist gemeinsam, dass sie - für den Einsatz im Fahrzeugbereich typisch - bei einer sehr kleinen Baugröße einen relativ schweren und stabilen Sperrbolzen sehr schnell zwischen den beiden Endstellungen (Verriegelungsstellung und Entriegelungsstellung) linear hin- und herbewegen können müssen. Das gelingt durch Einsatz eines sehr schnelldrehenden Elektromotors und eines Getriebezuges gemäß obiger Beschreibung, der die hohe Drehzahl des Motors mit einer entsprechenden Untersetzung in die ebenfalls schnelle aber von der Bewegungsstrecke sehr viel kürzere Linearbewegung des Sperrbolzens umsetzt.

In den Endstellungen muss die Bewegung der bewegten Elemente des Getriebezuges und/oder des Motors allerdings sehr aprupt gestoppt werden. Das kann entweder durch eine Modulierung des Antriebssignals des Motors, die über Positionsgeber vor Erreichen der Endstellungen ausgelöst wird und eine definierte Verzögerung des Motors bewirkt, oder durch Zuordnung eines festen mechanischen Anschlags zu einem geeigneten Bewegungselement des Getriebezuges erreicht werden, welcher dessen Bewegung an der definierten Endstellung blockiert. Die erste Lösung ist relativ aufwändig und daher kostenträchtig, weil sie die zusätzlichen Positionsgeber und eine aufwändige Steuerung erfordert, aber sie vermeidet Kraftspitzen und Impulse weitgehend. Die zweite Lösung ist zwar einfacher, führt aber zu hohen Kraftspitzen und bei selbsthemmenden Getrieben zu einer Blockierung, und insbesondere im Lauf der Zeit zu Beschädigungen an den Anschlagflächen und den Eingriffsabschnitten des Getriebezugs. Dem kann bisher nur durch Verzicht auf einfache Kunststoffteile, was die Kosten erhöht, oder durch entsprechend robuste Gestaltungen entgegengewirkt werden. Bei den zahlreichen Verriegelungseinheiten pro Fahrzeug und den hohen Stückzahlen im Bereich der Massenhersteller sind aber bereits geringe Kosteneinsparungen bei Gewährleistung einer hohen Betriebszuverlässigkeit von entscheidender Bedeutung.

Die EP 0449367 A1 zeigt eine Betätigungseinheit für eine Zentralverriegelung eines Fahrzeugs und damit nicht die eigentliche Verriegelungseinheit. Bei dieser Anordnung wird ein Anzeige- bzw. Betätigungsstift für die Zentralverriegelung, der typischerweise im Fensterbereich der Türe des Fahrzeugs angebracht ist, entweder durch einen Elektromotor ferngesteuert oder manuell durch Drücken betätigt.

Die US 2006/0103145 A1 beschreibt eine elektromechanische Verriegelungseinheit mit einem Elektromotor, einem Verriegelungsmechanismus mit einem Verriegelungsglied und einem Getriebezug zum Übertragen der Antriebskraft von einem Elektromotor auf das Verriegelungsglied. Bei dieser Anordnung ist ein Anschlag an einem Arm angeordnet, der ausdrücklich hinreichende Steifigkeit besitzt, um nicht verformt zu werden. Bei Erreichen der entsprechenden Endstellung wird die Rotation eines Zahnrads durch den Anschlag ohne Verzögerung blockiert.

Die US 2011/0278867 A1 beschreibt eine elektromechanische Verriegelungseinheit für eine Heckklappe des Fahrzeugs mit einem Elektromotor, einem Öffnungshebel, einem Steuerkurvenrad und einer Rückstellfeder. Bei der Rückstellfeder handelt es sich um eine spulenförmig aufgewickelte Biege- oder Spiralfeder, die dazu dient, den Verriegelungshebel nach dessen außer-Eingriff-Bringen von der Falle, das Kurvensteuerrad und das Zahnrad in die Ausgangsposition zurückzubewegen.

Die GB 2054725 A beschreibt eine elektromechanische Verriegelungseinheit für Fahrzeuge, die im Getriebezug eine Art Kupplung mit Kupplungselementen besitzt, die koaxial zueinander montiert und über einen bestimmten Bereich vor dem Einrücken bzw. Eingriff der Kupplung relativ zueinander verdrehbar sind. Bei einer Ausführungsform ist der Anschlag, ab dem die freie Drehung der beiden Kupplungselemente zueinander beendet wird und der Kupplungseingriff erfolgt, durch eine gebogene Metallplatte mit radialen Vorsprüngen gebildet. Diese haben aber nicht den Zweck, vor Erreichen des Eingriffs verformt zu werden, um die Drehung des einen Kupplungselements zu verzögern. Bei einer anderen Ausführungsform sind zu diesem Zweck innerhalb der Kupplung an den beiden entgegengesetzten Endanschlägen des relativen Bewegungsbereichs der Kupplungselemente elastische Hülsen vorgesehen, die sich beim Auftreffen des Getriebezugs an einer Endstellung verformen können, wenn die Kupplung eingerückt ist.

Die US 4645050 B beschreibt eine elektromechanische Verriegelungseinheit für den Fahrzeugbereich, in deren Getriebezug ebenfalls eine Art Kupplung vorgesehen ist, bei der die Anschläge, die den Eingriff der relativ zueinander verdrehbaren Kupplungselemente bewirken, durch vorstehende Enden eines Drahtrings gebildet sind.

Die DE 202004020261 U1 beschreibt eine externe Bremseinrichtung für eine elektromechanische Verriegelungseinheit im Fahrzeugbereich, die außerhalb des Getriebezuges angeordnet ist und von außen auf die Welle des Antriebsmotors mechanisch einwirkt, wenn die Bremseinrichtung über ein entsprechendes Kopplungselement betätigt wird.

Die WO 99/15748 A1 beschreibt eine weitere elektromechanische Verriegelungseinheit für den Fahrzeugbereich, die ebenfalls eine Bremsvorrichtung für eine Zahnstange/Zahnrad-Anordnung beschreibt.

Aufgabe der vorliegenden Erfindung ist es, eine elektromechanische Verriegelungseinheit zum Einsatz im Fahrzeugbereich, insbesondere als Ladesteckerverriegelung oder Lenkungsverriegelung bereitzustellen, die bei kostengünstiger Herstellbarkeit ein schnelles und zuverlässiges Abbremsen des Elektromotors bzw. des Verriegelungsglieds in den Endstellungen desselben ermöglicht.

Zur Lösung bringt die Erfindung eine elektromechanische Verriegelungseinheit mit den Merkmalen des Patentanspruches 1 in Vorschlag. Bevorzugte Ausgestaltungen der Verriegelungseinheit sind in den abhängigen Ansprüchen angegeben. Die Erfindung betrifft außerdem eine Ladesteckerverriegelung gemäß Anspruch 6 und eine Lenkungsverriegelung gemäß Anspruch 7, die jeweils die erfindungsgemäße Verriegelungseinheit aufweisen.

Erfindungsgemäß ist bei der Verriegelungseinheit ein Elektromotor und ein Verriegelungsmechanismus vorgesehen, der ein Verriegelungsglied, z.B. einen Sperrbolzen, und einen Getriebezug, z.B. ein Schneckengetriebe, zum Übertragen einer Antriebskraft von dem Elektromotor auf das Verriegelungsglied besitzt, um dieses zwischen einer Verriegelungsstellung und einer Entriegelungsstellung zu bewegen. Zumindest einem Bewegungselement in dem Verriegelungsmechanismus ist ein mechanischer Anschlag zugeordnet, der dessen Bewegung an einer definierten Endstellung blockiert, welche der jeweiligen Endstellung des Verriegelungsglieds entspricht. Das bewegungselement weist erfindungsgemäß ein elastisches Element auf, das vor Erreichen der definierten Endstellung durch den Eingriff mit dem Bewegungselement mechanisch verformbar ist, um die Bewegung des Bewegungselements ohne ausgeprägte Kraftspitze zu verzögern.

Die Verformung des elastischen Elements vor Erreichen der Endstellung absorbiert die kinetische Energie schonender als der feste bzw. starre Anschlag, dämpft den mechanischen Impuls und vermeidet eine hohe Kraftspitze. Dadurch müssen die einzelnen Elemente des Getriebezugs nicht so hohe Festigkeiten besitzen, so dass trotz Verzicht auf eine komplizierte Motorsteuerung auch einfache Kunststoffteile bei hoher Haltbarkeit verwendet werden können. Damit kann auch die Baugröße der Einheit kleiner ausfallen, was die Integrierbarkeit z.B. in einen Ladestecker oder eine Ladebuchse erleichtert.

Das elastische Element kann sowohl ein linearelastisches oder auch ein progressiv-elastisches Verhalten besitzen. Das Verhalten kann durch eine entsprechende Federkennlinie beeinflusst werden. Das elastische Element ist eine Biegefeder wie eine Blatt- oder eine Spiralfeder.

Bei der Erfindung ist das Bewegungselement, dem das elastische Element zugeordnet ist, ein Zahnrad in dem Getriebezug, beispielsweise das Schneckenrad bei einem Getriebe, wie es in der DE 102011050998 A1 beschrieben ist, und die Feder ist eine vorzugsweise runde Biege- oder Spiralfeder, welche um eine Drehachse des Zahnrads herum so angeordnet ist, dass ein Schenkel der Biege- oder Spiralfeder vor Erreichen der Endstellung des Zahnrads (die einer Endstellung des Sperrbolzens entspricht), in Eingriff mit einem festen Anschlag gelangt und dabei elastisch verformt wird. Die elastische Verformung führt zu einer gedämpften Verzögerung des Zahnrads vor der Endstellung. Die Biege-oder Spiralfeder ist erfindungsgemäß ferner so an dem Zahnrad angeordnet, dass sich mit der Verformung der Durchmesser der Biege- oder Spiralfeder verkleinert und der Innenumfang der Feder bei einer definierten Verformung mit einer feststehenden Fläche, insbesondere einem zu dem Zahnrad konzentrischen Gehäuseflansch, in Reibkontakt gelangt, wodurch eine zusätzliche Verzögerung auf das Zahnrad ausgeübt wird. Dadurch wird eine progressive Verzögerung erreicht.

Kurze Beschreibung der Figuren:
Figur 1 ist eine schematische Darstellung einer elektromechnaischen Verriegelungseinheit aus dem Stand der Technik in der Draufsicht.
Figur 2 ist eine Darstellung einer erfindungsgemäßen Verriegelungseinheit in Draufsicht.
Figur 3 ist eine perspektivische explosionsartige Darstellung der Verriegelungseinheit von Fig.2.
Figur 4 ist eine perspektivische isolierte Darstellung eines Zahnrades der Verriegelungseinheit von Fig.2. von unten gesehen.
Figur 5 ist eine perspektivische vergrößerte Teildarstellung der Verriegelungseinheit von Fig. 2 von unten betrachtet.

Detaillierte Beschreibung der Figuren:

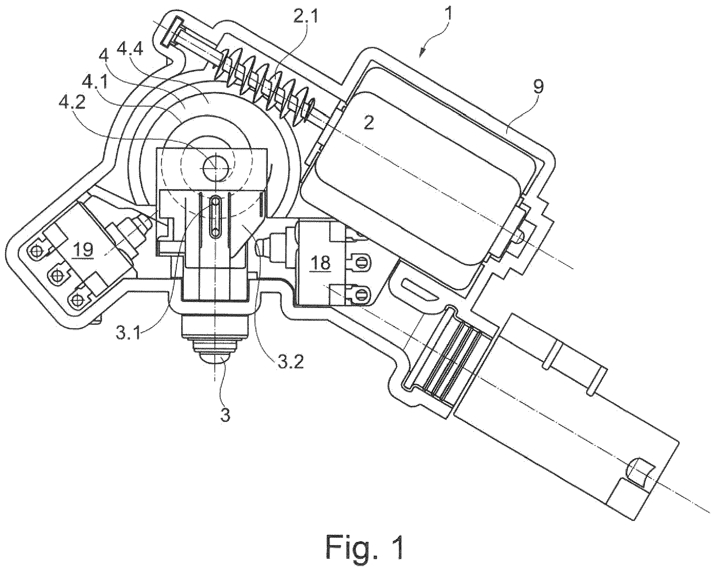

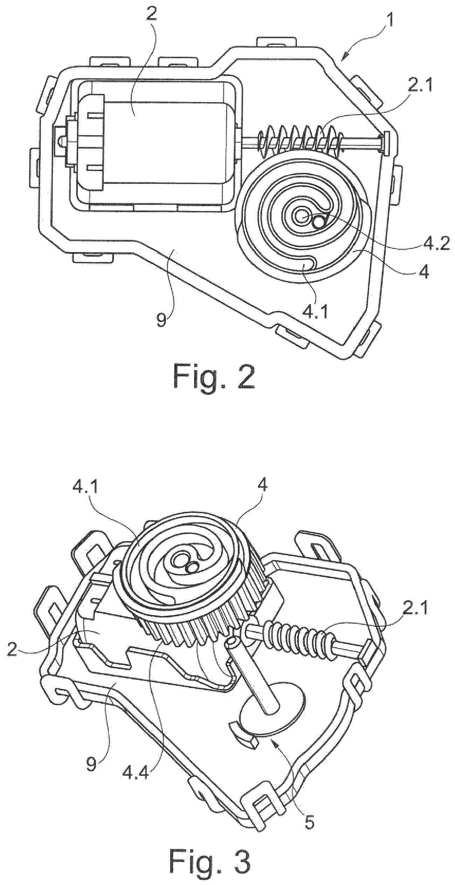

Die Figuren 2 bis 5 zeigen eine erfindungsgemäße Verriegelungseinheit in verschiedenen Ansichten und Teildarstellungen, die der aus der DE 102011050998 A1 bekannten Verriegelungseinheit gemäß Fig. 1 sehr ähnlich ist. Einige Komponenten wie Verriegelungsglied und Anschlußkontakte sind bei der Darstellung zur Verdeutlichung weggelassen. Insofern und bezüglich der gemeinsamen Elemente wie Motor und Getriebe, die mit den identischen Bezugszeichen versehen sind, wird auf die Darstellung und Beschreibung der Fig. 1 verwiesen.

In dem Gehäuse 9 ist auch hier ein Elektromotor 2 vorgesehen, der ein Zahnrad (Schneckenrad) 4 über eine Schnecke 2.1 antreibt. Das Zahnrad setzt mittels eines (nicht gezeigten) Führungselements eines Verriegelungsgliedes, das sich in einer Führungskurve 4.1 des Zahnrades 4 bewegt, die Drehung in eine lineare Bewegung des Verriegelungsgliedes um. Der so gebildete Getriebezug und die einzelnen Bewegungselemente desselben sind selbstverständlich nur exemplarisch und es können weitere oder weniger Bewegungselemente vorgesehen sein.

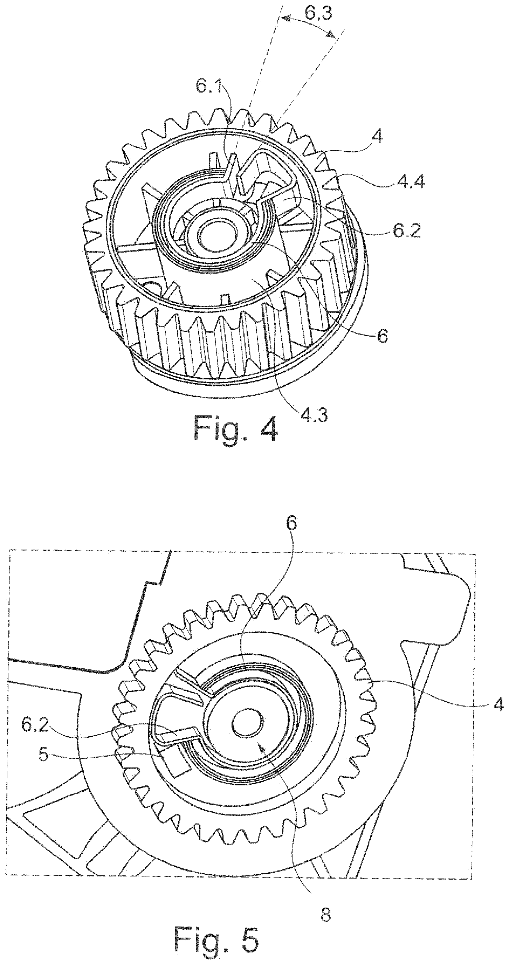

Das Zahnrad 4 ist etwa topfartig ausgebildet und besitzt an seiner in Fig. 2 nicht einsehbaren aber in den Fig. 4 und 5 gezeigten Unterseite anstelle eines starren Anschlages ein elastisches Element 6, das mit einem starren Anschlag 5, der als Vorsprung mit dem Gehäuse 9 verbunden oder integral ausgebildet ist, zusammenwirkt, wie im Folgenden erläutert wird.

Der gehäuseseitige Anschlag 5 definiert zusammen mit dem elastischen Element 6 die Endstellungen der Drehbewegung des Zahnrades. Anstelle eines einzigen Anschlages mit zwei Anschlagflächen können auch zwei separate Anschläge vorgesehen sein. In der dargestellten Ausführungsform ist das elastische Element 6 eine runde Biegefeder aus einem flachen Metallband, das zu einem Teilkreis gebogen ist und an den Enden radial nach Außen abgebogene Schenkel 6.1 und 6.2 besitzt. Der freie Abstand zwischen den Schenkeln definiert die maximal mögliche Bewegungsstrecke 6.3 des jeweiligen Schenkels und damit die maximal mögliche Verformung der Feder. In dem Beispiel ist der eine Schenkel 6.1 ein radial nach außen gerade abgebogenes Ende des Metallbandes während der andere Anschlag 6.2 gebildet ist, indem das andere Ende zunächst radial nach außen, dann in Umfangsrichtung und zuletzt wieder radial nach innen abgebogen ist und so eine insgesamt etwa U-förmige Struktur besitzt. Die Form der Schenkel ist aber an sich beliebeig.

Die runde Biegefeder ist in einen nabenartigen Vorsprung 4.3 des Zahnrades 4 eingesetzt. Bei Drehung des Zahnrades gelangt, je nach Drehrichtung, der eine oder der andere Schenkel der Biegefeder an einer bestimmten Drehposition in Eingriff mit einer der Anschlagflächen des starren Anschlags 5 des Gehäuses. Ab diesem Punkt wird beim Weiterdrehen des Zahnrades die Biegefeder verformt, indem dieser Schenkel zu dem anderen Schenkel bewegt wird. Dabei verkleinert sich der Durchmesser der Biegefeder und die Außenumfangsfläche der Biegefeder löst sich partiell von der Anlage an dem nabenartigen Vorsprung 4.3 des Zahnrades ab. Ab einem bestimmten Verformungsgrad legt sich die Innenumfangsfläche der Biegefeder dann an einer Außenumfangsfläche eines zum Zahnrad konzentrischen feststehenden nabenartigen Flansches 8 des Gehäuses 9 an, wodurch eine Reibungskraft erzeugt wird, welche der Drehbewegung des Zahnrades entgegen wirkt. Mit zunehmender Verformung der Biegefeder wird die Andruckkraft der Feder an dem Flansch 8 des Gehäuses und damit die Reibungskraft immer größer. Sowohl die Elastizität der Biegefeder als auch die Reibungskraft führen zu einer sanft bzw. langsam einsetzenden Verzögerung der Drehung des Zahnrades bis zum Stillstand - spätestens wenn der eine Schenkel an dem anderen Schenkel anliegt.

Diese Ausgestaltung kann auch modifiziert werden, indem eine anders geformte Feder eingesetzt wird. Konzentrische Biegefedern aus Runddraht, Spiralfedern oder aber mechanische Federn, die so in dem Zahnrad angeordnet sind, dass sie durch den Eingriff mit dem Anschlag des Gehäuses einfach komprimiert werden, sind ebenfalls denkbar.

Das Zahnrad bei dem Schneckengetriebe bietet sich für die Anordnung des elastischen Elements in Form der Biegefeder oder Spiralfeder an, weil es das größte Bauteil ist und eine relativ lange Umfangsstrecke zwischen den beiden Endstellungen zurücklegt, so dass ausreichend Platz zum Einbau der Anschläge und des elastischen Elements vorhanden ist.

Bei der erfindungsgemäßen Lösung kann sowohl auf Endstellungssensoren oder -schalter zur Erfassung der Position des Verriegelungsgliedes als auch auf eine komplexe Steuerung für den Motor, die deren Signale auswertet und die Antriebssignal des Motors bei Annäherung an die Endstellungen moduliert, verzichtet werden. Gleichzeitig sind die Elemente des Getriebezuges vor Kraftspitzen bei Erreichen der Endstellungen geschützt, so dass die Bauteile kostengünstig hergestellt werden können und eine lange Lebensdauer besitzen. Die zusätzliche Biege- oder Spiralfeder ist demgegenüber sehr billig. Anders als die elektronische Lösung bieten die elastischen Elemente auch Schutz bei mechanischen Vibrationen und Stößen von Außen. Dieser Vorteil ist besonders beim Einsatz der Verriegelungseinheit in Ladesteckern oder -buchsen von Ladekabeln für Elektrofahrzeuge von Bedeutung, weil diese manuell gehandhabt werden und daher häufig auch unsachgemäßer Behandlung ausgesetzt sind.

### Bezugszeichenliste

- 1: Elektromechanische Verriegelungseinheit
- 2: Elektromotor
- 2.1: Schnecke
- 3: Verriegelungsglied
- 3.1: Führungselement des Verriegelungsglieds
- 4: Bewegungselement/Zahnrad
- 4.1: Steuerkurve zur Führung des Verriegelungsgliedes
- 4.2: Drehachse des Bewegungselements/Zahnrads
- 4.3: nabenartiger Vorsprung
- 4.4: Zähne des Bewegungselements/Zahnrades
- 5: gehäuseseitiger Anschlag
- 6: Elastisches Element/Biegefeder
- 6.1: Erster Schenkel der Biegefeder
- 6.2: Zweiter Schenkel der Biegefeder
- 6.3: Verzögerungsweg des Anschlags gegen die Federkraft
- 8: Gehäuseflansch
- 9: Gehäuse
- 18/19: Schalter

## Patentansprüche

1. Elektromechanische Verriegelungseinheit (1) für den Fahrzeugbereich, mit
einem Elektromotor (2), und
einem Verriegelungsmechanismus, der ein Verriegelungsglied (3) und einen Getriebezug zum Übertragen einer Antriebskraft von dem Elektromotor (2) auf das Verriegelungsglied (3), um dieses zwischen einer Verriegelungsstellung und einer Entriegelungsstellung zu bewegen, aufweist,
wobei zumindest einem Zahnrad (4) in dem Getriebezug des Verriegelungsmechanismus ein mechanischer Anschlag (5) zugeordnet ist, der dessen Drehung an einer definierten Endstellung blockiert,
wobei das Zahnrad (4) eine Biege- oder Spiralfeder (6) aufweist, die so angeordnet ist, dass sie vor Erreichen der definierten Endstellung mechanisch verformt wird, um die Drehung des Zahnrads (4) zu verzögern,
wobei die Biege- oder Spiralfeder (6) um eine Drehachse (4.2) des Zahnrads (4) herum so angeordnet ist, dass sie vor Erreichen der Endstellung des Zahnrads (4) in Eingriff mit dem Anschlag (5) gelangt und dabei elastisch verformt wird, und
wobei die Biege- oder Spiralfeder (6) an dem Zahnrad (4) so angeordnet ist, dass sie bei einer definierten Verformung mit einer feststehenden Fläche in Reibungskontakt gelangt, wodurch eine zusätzliche Verzögerung auf das Zahnrad (4) ausgeübt wird.

2. Die elektromechanische Verriegelungseinheit (1) gemäß Anspruch 1, wobei die Biege- oder Spiralfeder (6) ein lineares oder ein progressives elastisches Verhalten besitzt.

3. Die elektromechanische Verriegelungseinheit (1) gemäß Anspruch 1 oder 2, wobei die Biegefeder eine runde Biegefeder (6) ist.

4. Die elektromechanische Verriegelungseinheit (1) gemäß Anspruch 1, 2 oder 3, wobei die feststehende Fläche, mit der die Biege- oder Spiralfeder (6) in Reibungskontakt gelangt, ein zu dem Zahnrad (4) konzentrischer Gehäuseflansch (8) ist.

5. Die elektromechanische Verriegelungseinheit (1) gemäß einem der Ansprüche 1 bis 4, wobei die Biege- oder Spiralfeder (6) aus einem flachen Metallband zu einem Teilkreis gebogen ist und an den Enden abgebogene Schenkel (6.1,6.2) besitzt, welche dazu vorgesehen sind, um mit dem Anschlag (5) vor Erreichen der definierten Endstellung in Eingriff zu gelangen.

6. Ladesteckerverriegelung für Kraftfahrzeug-Ladestecker, mit einer elektromechanischen Verriegelungseinheit (1) gemäß einem der Ansprüche 1 bis 5.

7. Lenkungsverriegelung für Kraftfahrzeuge, mit einer elektromechanischen Verriegelungseinheit (1) gemäß einem der Ansprüche 1 bis 5.

## Claims

1. Electromechanical locking unit (1) for the vehicle sector, having,
an electric motor (2), and
a locking mechanism which has a locking member (3) and a gear train for transmitting a driving force from the electric motor (2) to the locking member (3) in order to move the latter between a locking position and an unlocking position,
wherein at least one toothed wheel (4) in the gear train of the locking mechanism is assigned a mechanical stop (5) which blocks its rotation at a defined end position, wherein the toothed wheel (4) has a bending or spiral spring (6) which is arranged such that, before reaching the defined end position, it is mechanically deformed in order to decelerate the rotation of the toothed wheel (4),
wherein the bending or spiral spring (6) is arranged around an axis of rotation (4.2) of the toothed wheel (4) in such a way that, before reaching the end position of the toothed wheel (4), it comes into engagement with the stop (5) and is elastically deformed in the process, and
wherein the bending or spiral spring (6) is arranged on the toothed wheel (4) in such a way that, under a defined deformation, it comes into frictional contact with a fixed surface, with the result that an additional deceleration is applied to the toothed wheel (4).

2. Electromechanical locking unit (1) according to Claim 1, wherein the bending or spiral spring (6) has a linear or a progressive elastic behaviour.

3. Electromechanical locking unit (1) according to Claim 1 or 2, wherein the bending spring is a round bending spring (6).

4. Electromechanical locking unit (1) according to Claim 1, 2 or 3, wherein the fixed surface with which the bending or spiral spring (6) comes into frictional contact is a housing flange (8) which is concentric to the toothed wheel (4).

5. Electromechanical locking unit (1) according to one of Claims 1 to 4, wherein the bending or spiral spring (6) is bent from a flat metal strip to form a part-circle and is provided at the ends with bent-off legs (6.1, 6.2) which are intended to come into engagement with the stop (5) before reaching the defined end position.

6. Charging plug lock for motor vehicle charging plugs, having an electromechanical locking unit (1) according to one of Claims 1 to 5.

7. Steering lock for motor vehicles, having an electromechanical locking unit (1) according to one of Claims 1 to 5.

## Revendications

1. Unité de verrouillage électromécanique (1) pour le domaine automobile, comprenant
un moteur électrique (2) et
un mécanisme de verrouillage qui présente un organe de verrouillage (3) et un train d'engrenages pour transmettre une force d'entraînement du moteur électrique (2) à l'organe de verrouillage (3) afin de déplacer celui-ci entre une position de verrouillage et une position de déverrouillage,
au moins une roue dentée (4) dans le train d'engrenage du mécanisme de verrouillage étant associée à une butée mécanique (5) qui bloque sa rotation dans une position terminale définie,
la roue dentée (4) présentant un ressort de flexion ou spiral (6) qui est disposé de telle sorte qu'il soit déformé mécaniquement avant d'atteindre la position terminale définie, de retarder la rotation de la roue dentée (4),
le ressort de flexion ou spiral (6) étant disposé autour d'un axe de rotation (4.2) de la roue dentée (4) de telle sorte qu'il vienne en prise avec la butée (5) et soit ainsi déformé élastiquement avant d'atteindre la position terminale de la roue dentée (4), et
le ressort de flexion ou spiral (6) étant disposé au niveau de la roue dentée (4) de telle sorte qu'il vienne en contact de frottement avec une surface fixe dans le cas d'une déformation définie, de sorte qu'un ralentissement supplémentaire soit conféré à la roue dentée (4).

2. Unité de verrouillage électromécanique (1) selon la revendication 1, dans laquelle le ressort de flexion ou spiral (6) possède un comportement linéaire ou élastique progressif.

3. Unité de verrouillage électromécanique (1) selon la revendication 1 ou 2, dans laquelle le ressort de flexion est un ressort de flexion rond (6).

4. Unité de verrouillage électromécanique (1) selon la revendication 1, 2 3, dans laquelle la surface fixe avec laquelle le ressort de flexion ou spiral (6) vient en contact de friction est une bride de boîtier (8) concentrique avec la roue dentée (4).

5. Unité de verrouillage électromécanique (1) selon l'une quelconque des revendications 1 à 4, dans laquelle le ressort de flexion ou spiral (6) est cintré à partir d'une bande métallique plate pour former un cercle partiel et possède des branches (6.1, 6.2) recourbées au niveau des extrémités qui sont prévues pour venir en prise avec la butée (5) avant d'atteindre la position terminale définie.

6. Verrouillage de fiche de chargement pour une fiche de chargement de véhicule automobile, comprenant une unité de verrouillage électromécanique (1) selon l'une quelconque des revendications 1 à 5.

7. Verrouillage de direction pour véhicules automobiles, comprenant une unité de verrouillage électromécanique (1) selon l'une quelconque des revendications 1 à 5.
